(19) Europäisches Patentamt
European Patent Office
Office européen des brevets

(11) **EP 4 429 361 A1**

(12) **EUROPEAN PATENT APPLICATION**
published in accordance with Art. 153(4) EPC

(43) Date of publication:
**11.09.2024  Bulletin 2024/37**

(21) Application number: **22890186.4**

(22) Date of filing: **28.09.2022**

(51) International Patent Classification (IPC):
**H04W 72/04** *(2023.01)*    **H04W 24/10** *(2009.01)*
**H04W 64/00** *(2009.01)*

(52) Cooperative Patent Classification (CPC):
**H04W 24/10; H04W 64/00; H04W 72/04**

(86) International application number:
**PCT/KR2022/014514**

(87) International publication number:
**WO 2023/080451 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **03.11.2021  KR 20210150040**

(71) Applicant: **LG Electronics Inc.**
**Yeongdeungpo-gu**
**Seoul 07336 (KR)**

(72) Inventors:
• **LEE, Jeongsu**
  **Seoul 06772 (KR)**
• **KIM, Kijun**
  **Seoul 06772 (KR)**
• **KO, Hyunsoo**
  **Seoul 06772 (KR)**
• **PARK, Haewook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR OPERATING DEVICE IN WIRELESS COMMUNICATION SYSTEM**

(57)     Various embodiments relate to a next-generation wireless communication system for supporting a data transmission rate and the like higher than that of a 4th generation (4G) wireless communication system. According to various embodiments, a method and an apparatus for operating a device in a wireless communication system can be provided, and other various embodiments can be provided.

FIG. 15

**Description**

**TECHNICAL FIELD**

The present disclosure relates to a wireless communication system.

**BACKGROUND**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

**DISCLOSURE**

**TECHNICAL PROBLEM**

The present disclosure aims to provide a method for operating an apparatus in a wireless communication system and apparatus therefor.

It will be appreciated by persons skilled in the art that the objects that could be achieved with various embodiments is not limited to what has been particularly described hereinabove and the above and other objects that various embodiments could achieve will be more clearly understood from the following detailed description.

**TECHNICAL SOLUTION**

In an embodiment, provided herein are a method of operating an apparatus in a wireless communication system and apparatus therefor.

According to the embodiment, a method performed by a user equipment (UE) in a wireless communication system may be provided.

According to the embodiment, the method may include receiving an activation/deactivation command for at least one first positioning measurement gap (MG) included in predetermined positioning MGs via a medium access control (MAC) control element (CE).

According to the embodiment, the method may include deactivating the at least one first positioning MG based on that the activation/deactivation command instructs deactivation of the at least one first positioning MG.

According to the embodiment, the predetermined positioning MGs may be preconfigured through radio resource control (RRC) signaling.

According to the embodiment, the predetermined positioning MGs may be related to different identifiers, respectively.

According to the embodiment, the MAC CE may include at least one identifier.

According to the embodiment, based on that the activation/deactivation command instructs the deactivation of the at least one first positioning MG, at least one positioning MG related to the at least one identifier included in the MAC CE among the predetermined positioning MGs related to the different identifiers may be identified as the at least one first positioning MG to be deactivated.

According to the embodiment, the method may include transmitting an activation request for at least one second positioning MG among the predetermined positioning MGs via the MAC CE.

According to the embodiment, the activation request may include at least one identifier related to the at least one second positioning MG among the different identifiers.

According to the embodiment, the method may include activating at least one positioning MG based on that the activation/deactivation command instructs activation of the at least one positioning MG.

According to the embodiment, based on that the activation/deactivation command instructing the activation of the at least one positioning MG includes information on a deactivation time, the activated at least one positioning MG is deactivated after a time identified based on the information on the deactivation time.

According to the embodiment, a UE configured to operate in a wireless communication system may be provided.

According to the embodiment, the UE may include: a transceiver; and at least one processor connected to the transceiver.

According to the embodiment, the at least one processor may be configured to receive an activation/deactivation command for at least one first positioning MG included in predetermined positioning MGs via a MAC CE.

According to the embodiment, the at least one processor may be configured to deactivate the at least one first positioning MG based on that the activation/deactivation command instructs deactivation of the at least one first positioning MG.

According to the embodiment, the predetermined positioning MGs may be preconfigured through RRC signaling.

According to the embodiment, the predetermined positioning MGs may be related to different identifiers, respectively.

According to the embodiment, the MAC CE may include at least one identifier.

According to the embodiment, based on that the activation/deactivation command instructs the deactivation of the at least one first positioning MG, at least one positioning MG related to the at least one identifier included in the MAC CE among the predetermined positioning MGs related to the different identifiers may be identified as the at least one first positioning MG to be deactivated.

According to the embodiment, the at least one processor may be configured to transmit an activation request for at least one second positioning MG among the predetermined positioning MGs via the MAC CE.

According to the embodiment, the activation request may include at least one identifier related to the at least one second positioning MG among the different identifiers.

According to the embodiment, the at least one processor may be configured to activate at least one positioning MG based on that the activation/deactivation command instructs activation of the at least one positioning MG.

According to the embodiment, the at least one processors may be configured to communicate with at least one of a mobile terminal, a network, and an autonomous vehicle other than a vehicle including the UE.

According to the embodiment, a method performed by a base station (BS) in a wireless communication system may be provided.

According to the embodiment, the method may include: generating an activation/deactivation command for at least one first positioning MG included in predetermined positioning MGs.

According to the embodiment, the method may include transmitting the activation/deactivation command via a MAC CE.

According to the embodiment, based on the activation/deactivation command instructs deactivation of the at least one first positioning MG, the at least one first positioning MG may be deactivated.

According to the embodiment, a BS configured to operate in a wireless communication system may be provided.

According to the embodiment, the BS may include a transceiver; and at least one processor connected to the transceiver.

According to the embodiment, the at least one processors may be configured to generate an activation/deactivation command for at least one first positioning MG included in predetermined positioning MGs.

According to the embodiment, the at least one processors may be configured to transmit the activation/deactivation command via a MAC CE.

According to the embodiment, based on the activation/deactivation command instructs deactivation of the at least one first positioning MG, the at least one first positioning MG may be deactivated.

According to the embodiment, an apparatus configured to operate in a wireless communication system may be provided.

According to the embodiment, the apparatus may include: at least one processor; and at least one memory operably connected to the at least one processor and configured to store one or more instructions that, based on execution, cause the at least one processor to perform operations.

According to the embodiment, the operations may include receiving an activation/deactivation command for at least one first positioning MG included in predetermined positioning MGs via a MAC CE.

According to the embodiment, the operations may include deactivating the at least one first positioning MG based on that the activation/deactivation command instructs deactivation of the at least one first positioning MG.

According to the embodiment, a non-transitory processor-readable medium configured to store one or more instructions that cause at least one processor to perform operations may be provided.

According to the embodiment, the operations may include receiving an activation/deactivation command for at least one first positioning MG included in predetermined positioning MGs via a MAC CE.

According to the embodiment, the operations may include deactivating the at least one first positioning MG based on that the activation/deactivation command instructs deactivation of the at least one first positioning MG.

It is to be understood that both the foregoing general description and the following detailed description of the present disclosure are exemplary and explanatory and are intended to provide further explanation of the disclosure as claimed.

## ADVANTAGEOUS EFFECTS

According to the embodiment, a method of operating an apparatus in a wireless communication system and apparatus therefor may be provided.

According to various embodiments, a signal may be effectively transmitted and received in a wireless communication system.

According to various embodiments, positioning may be effectively performed in a wireless communication system.

According to the embodiment, positioning may be performed effectively in situations where at least one measurement gap (MG) is configured.

It will be appreciated by persons skilled in the art that the effects that can be achieved with various embodiments is not limited to what has been particularly described hereinabove and other advantages of various embodiments will be more clearly understood from the following detailed description taken in conjunction with the accompanying drawings.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings.

FIG. 1 is a diagram illustrating physical channels and a signal transmission method using the physical channels, which may be used in various embodiments.

FIG. 2 is a diagram illustrating a radio frame structure in a new radio access technology (NR) system to which various embodiments are applicable.

FIG. 3 illustrates an exemplary resource grid to which the embodiment is applicable.

FIG. 4 is a diagram illustrating mapping of physical channels in a slot, to which the embodiment is applicable.

FIG. 5 is a diagram illustrating an exemplary positioning protocol configuration for user equipment (UE) positioning, which is applicable to the embodiment.

FIG. 6 is a diagram illustrating an example of an architecture of a system for positioning a UE, to which the embodiment is applicable.

FIG. 7 is a diagram illustrating an example of a procedure of positioning a UE, to which the embodiment is applicable.

FIG. 8 is a diagram illustrating protocol layers for supporting LTE positioning protocol (LPP) message transmission, to which the embodiment is applicable.

FIG. 9 is a diagram illustrating protocol layers for supporting NR positioning protocol A (NRPPa) protocol data unit (PDU) transmission, to which the embodiment is applicable.

FIG. 10 is a diagram illustrating an observed time difference of arrival (OTDOA) positioning method, to which the embodiment is applicable.

FIG. 11 is a diagram illustrating a multi-round trip time (multi-RTT) positioning method to which the embodiment is applicable.

FIG. 12 is a simplified diagram illustrating a method of operating a UE, a transmission and reception point (TRP), a location server, and/or a location management function (LMF) according to the embodiment.

FIG. 13 is a simplified diagram illustrating a method of operating a UE, a transmission and reception point (TRP), a location server, and/or a location management function (LMF) according to the embodiment.

FIG. 14 illustrates an exemplary medium access control (MAC) control element (CE) configuration according to the embodiment.

FIG. 15 is a diagram schematically illustrating an operation method of a UE and a network node according to the embodiment.

FIG. 16 is a flowchart illustrating an operating method of a UE according to the embodiment.

FIG. 17 is a flowchart illustrating an operating method of a network node according to the embodiment.

FIG. 18 is a block diagram illustrating an apparatus for implementing the embodiment.

FIG. 19 is a diagram illustrating a communication system to which the embodiment is applicable.

FIG. 20 is a block diagram illustrating wireless devices to which the embodiment is applicable.

FIG. 21 is a block diagram illustrating another example of wireless devices to which the embodiment is applicable.

FIG. 22 is a block diagram illustrating a portable device applied to the embodiment.

FIG. 23 is a block diagram illustrating a vehicle or an autonomous driving vehicle, which is applied to the embodiment.

**DETAILED DESCRIPTION**

The embodiment is applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

The embodiment is described in the context of a 3GPP communication system (e.g., including LTE, NR, 6G, and next-generation wireless communication systems) for clarity of description, to which the technical spirit of the embodiment is not limited. For the background art, terms, and abbreviations used in the description of the embodiment, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

### 1. 3GPP System

### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

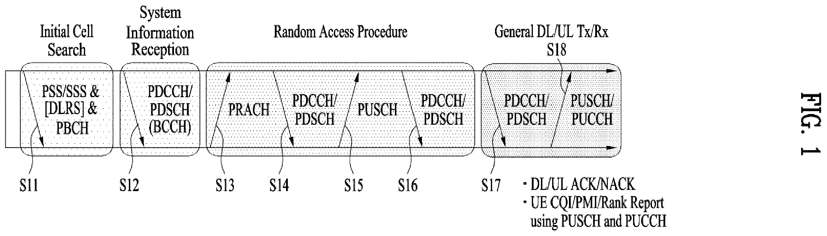

FIG. 1 is a diagram illustrating physical channels and a signal transmission method using the physical channels, which may be used in the embodiment.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Physical Resource

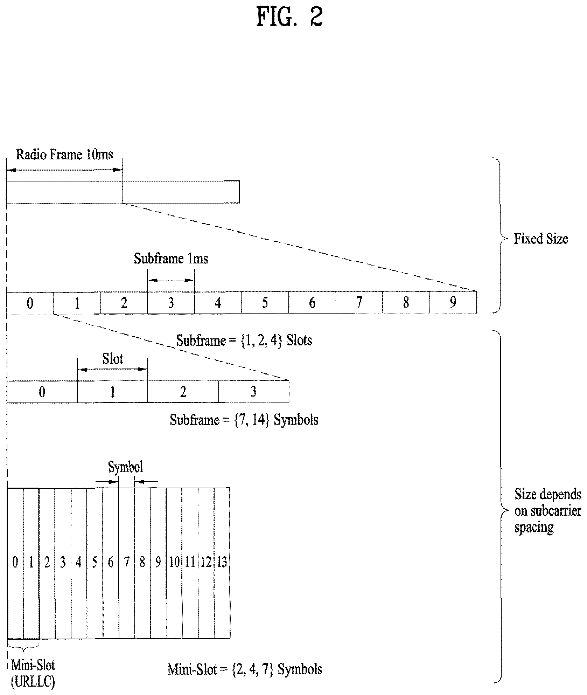

FIG. 2 is a diagram illustrating a radio frame structure in a new radio access technology (NR) system to which the embodiment is applicable.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, $\mu$ and a CP are obtained from RRC parameters provided by the BS.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15 kHz, a dense-urban area, a lower latency, and a wider carrier bandwidth are supported for an SCS of 30 kHz/60 kHz, and a larger bandwidth than 24.25 GHz is supported for an SCS of 60 kHz or more, to overcome phase noise.

An NR frequency band is defined by two types of frequency ranges, FR1 and FR2. FR1 may be a sub-6 GHz range, and FR2 may be an above-6 GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz - 7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, $Tc = 1/(\triangle fmax*Nf)$ where $\triangle fmax = 480*10^3$ Hz and a value Nf related to a fast Fourier transform (FFT) size or an inverse fast Fourier transform (IFFT) size is given as Nf = 4096. Tc and Ts which is an LTE-based time unit and sampling time, given as Ts = 1/((15 kHz)*2048) are placed in the following relationship: Ts/Tc = 64. DL and UL transmissions are organized into (radio) frames each having a duration of $Tf = (\triangle fmax*Nf/100)*Tc$ = 10 ms. Each radio frame includes 10 subframes each having a duration of $Tsf = (\triangle fmax*Nf/1000)*Tc$ = 1 ms. There may exist one set of frames for UL and one set of frames for DL. For a numerology $\mu$, slots are numbered with $n\mu s \in \{0,...,Nslot,\mu subframe-1\}$ in an increasing order in a subframe, and with $n\mu s,f \in \{0,...,Nslot,\mu frame-1\}$ in an increasing order in a radio frame. One slot includes $N\mu symb$ consecutive OFDM symbols, and $N\mu symb$ depends on a CP. The start of a slot $n\mu s$ in a subframe is aligned in time with the start of an OFDM symbol $n\mu s*N\mu symb$ in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the above tables, Nslotsymb represents the number of symbols in a slot, Nframe,µslot represents the number of slots in a frame, and Nsubframe,µslot represents the number of slots in a subframe.

In the NR system to which the embodiment is applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

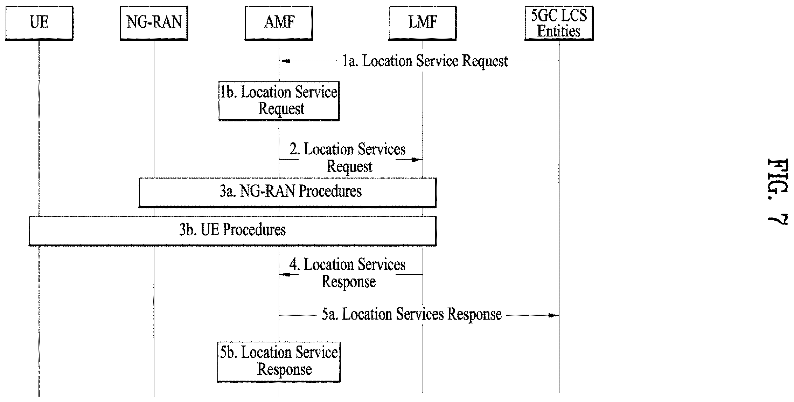

FIG. 2 illustrates an example with µ=2 (i.e., an SCS of 60kHz), in which referring to Table 6, one subframe may include four slots. One subframe = {1, 2, 4} slots in FIG. 7, which is exemplary, and the number of slot(s) which may be included in one subframe is defined as listed in Table 3 or Table 4.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi co-located or quasi co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

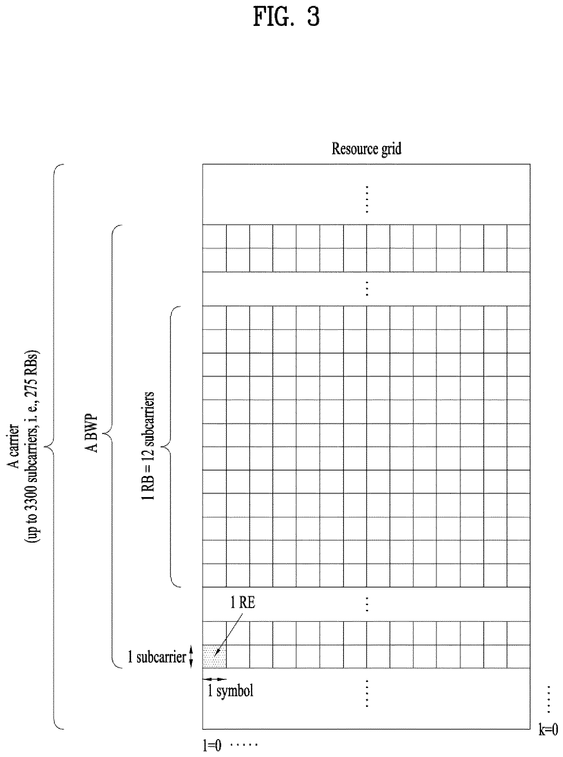

FIG. 3 illustrates an exemplary resource grid to which the embodiment is applicable.

Referring to FIG. 3, for each subcarrier spacing (SCS) and carrier, a resource grid is defined as $14 \times 2^{\mu}$ OFDM symbols by $N_{grid}^{size,\mu} \times N_{SC}^{RB}$ subcarriers, where $N_{grid}^{size,\mu}$ is indicated by RRC signaling from the BS. $N_{grid}^{size,\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, l) where k represents an index in the frequency domain, and I represents a symbol position in the frequency domain relative to a reference point. The RE (k, l) for the SCS configuration $\mu$ and the antenna port p corresponds to a physical resource and a complex value $a_{k,l}^{(p,\mu)}$. An RB is defined as $N_{SC}^{RB} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

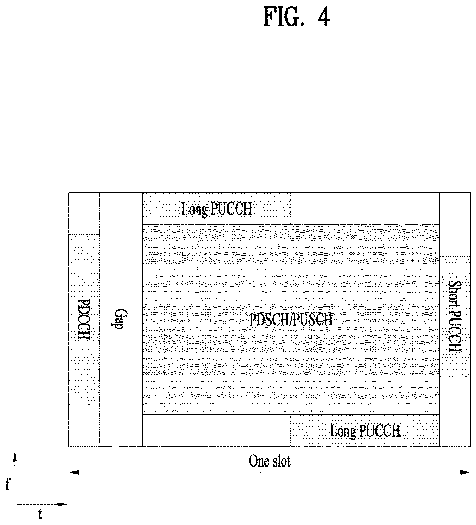

FIG. 4 is a diagram illustrating exemplary mapping of physical channels in a slot, to which the embodiment is applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16 QAM), 64 QAM, or 256 QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

## 2. Positioning

Positioning may refer to determination of the geographical location and/or velocity of the UE based on measurement of radio signals. Location information may be requested by a client (e.g., application) related to the UE and reported to the client. The location information may also be requested by a client existing in or connected to a core network. The location information may be reported in standard formats such as cell-based or geographical coordinates. In this case, estimated errors about the location and velocity of the UE and/or a positioning method used for positioning may be reported together.

**2.1. Positioning Protocol Configuration**

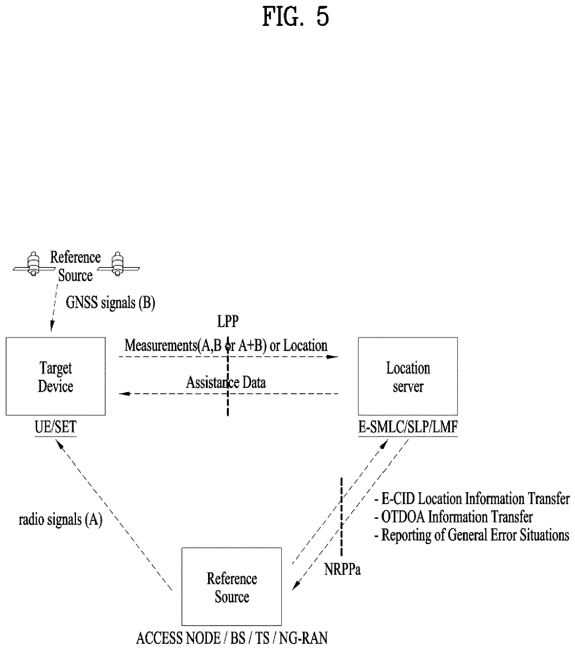

FIG. 5 is a diagram illustrating an exemplary positioning protocol configuration for positioning a UE, to which the embodiment is applicable.

Referring to FIG. 5, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

**2.2. PRS (positioning reference signal)**

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m = 0,1,...$) may be defined by Equation 1.

[Equation 1]

$$r(m) = \frac{1}{\sqrt{2}}\left(1 - 2c(m)\right) + j\frac{1}{\sqrt{2}}\left(1 - 2c(m+1)\right)$$

c(i) may be a pseudo-random sequence. A pseudo-random sequence generator may be initialized by Equation 2.

[Equation 2]

$$c_{\text{init}} = \left(2^{22}\left\lfloor\frac{n_{\text{ID,seq}}^{\text{PRS}}}{1024}\right\rfloor + 2^{10}\left(N_{\text{symb}}^{\text{slot}}n_{\text{s,f}}^{\mu} + l + 1\right)\left(2\left(n_{\text{ID,seq}}^{\text{PRS}} \bmod 1024\right) + 1\right)\right.$$

$$\left. + \left(n_{\text{ID,seq}}^{\text{PRS}} \bmod 1024\right)\right) \bmod 2^{31}$$

$n_{\text{s,f}}^{\mu}$ may be a slot number in a frame in an SCS configuration $\mu$. A DL PRS sequence

ID $n_{\text{ID,seq}}^{\text{PRS}} \in \{0,1,...,4095\}$ may be given by a higher-layer parameter (e.g., DL-PRS-SequenceId). l may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k, l)_{p,\mu}$, specifically by Equation 3. $(k, l)_{p,\mu}$ may represent an RE $(k, l)$ for an antenna port p and the SCS configuration $\mu$.

$$[\text{Equation 3}]$$

$$a_{k,l}^{(p,\mu)} = \beta_{\text{PRS}}\, r(m)$$

$$m = 0, 1, \ldots$$

$$k = mK_{\text{comb}}^{\text{PRS}} + \left(\left(k_{\text{offset}}^{\text{PRS}} + k'\right) \bmod K_{\text{comb}}^{\text{PRS}}\right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-Resource-SymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2, 4, 6, 12\}$ may be given by a higher-layer parameter transmission-Comb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \left\{0, 1, \ldots, K_{\text{comb}}^{\text{PRS}} - 1\right\}$ may be given by combOffset. A frequency offset $k'$ may be a function of $l - l_{\text{start}}^{\text{PRS}}$ as shown in Table 5.

$$[\text{Table 5}]$$

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 6 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration $\mu$. $n_{\text{f}}$ may be a system frame number (SFN). $n_{\text{s,f}}^{\mu}$ may be a slot number in a frame in the SCS configuration $\mu$. A slot offset $T_{\text{offset}}^{\text{PRS}} \in \left\{0,1,\dots,T_{\text{per}}^{\text{PRS}}-1\right\}$ may be given by a higher-layer parameter DL-PRS-ResourceSetSlotOffset. A DL PRS resource slot offset $T_{\text{offset,res}}^{\text{PRS}}$ may be given by a higher layer parameter DL-PRS-ResourceSlotOffset. A periodicity $T_{\text{per}}^{\text{PRS}} \in \{4,5,8,10,16,20,32,40,64,80,160,320,640,1280,2560,5120,10240\}$ may be given by a higher-layer parameter DL-PRS-Periodicity. A repetition factor $T_{\text{rep}}^{\text{PRS}} \in \{1,2,4,6,8,16,32\}$ may be given by a higher-layer parameter DL-PRS-ResourceRepetitionFactor. A muting repetition factor $T_{\text{muting}}^{\text{PRS}}$ may be given by a higher-layer parameter DL-PRS-MutingBitRepetitionFactor. A time gap $T_{\text{gap}}^{\text{PRS}} \in \{1,2,4,8,16,32\}$ may be given by a higher-layer parameter DL-PRS-ResourceTimeGap.

## 2.3. UE Positioning Architecture

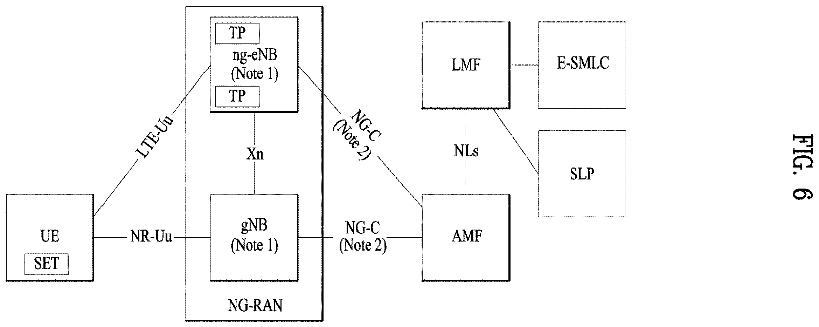

FIG. 6 illustrates an exemplary system architecture for measuring positioning of a UE to which the embodiment is applicable.

Referring to FIG. 6, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

### 2.4. Operation for UE Positioning

FIG. 7 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 7. In other words, in FIG. 7 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 7. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LMF or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the LTE to the LTE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the LTE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the LTE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 7 has been initiated by step 1a, the AMF may transfer the location service response to a 5GC entity such as a GMLC. If the procedure of FIG. 7 has been initiated by step 1b, the AMF may use the location service response in order to provide a location service related to an emergency call.

## 2.5. Positioning Protocol

LTE Positioning Protocol (LPP)

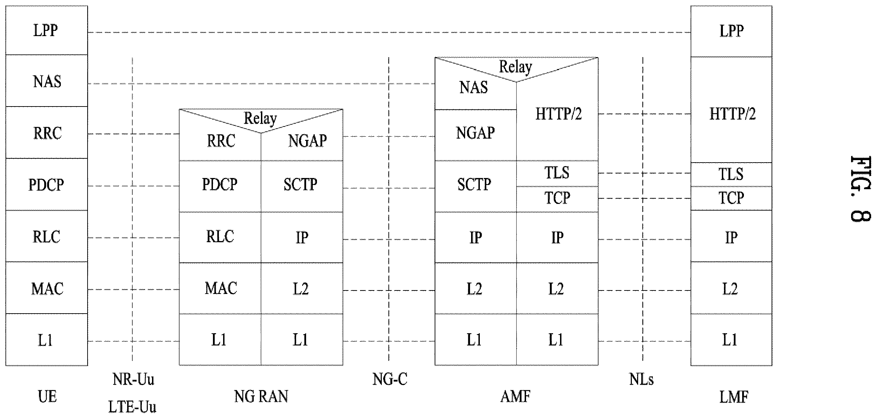

FIG. 8 illustrates an exemplary protocol layer used to support LPP message transfer between an LMF and a UE. An LPP protocol data unit (PDU) may be carried in a NAS PDU between an AMF and the UE.

Referring to FIG. 8, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

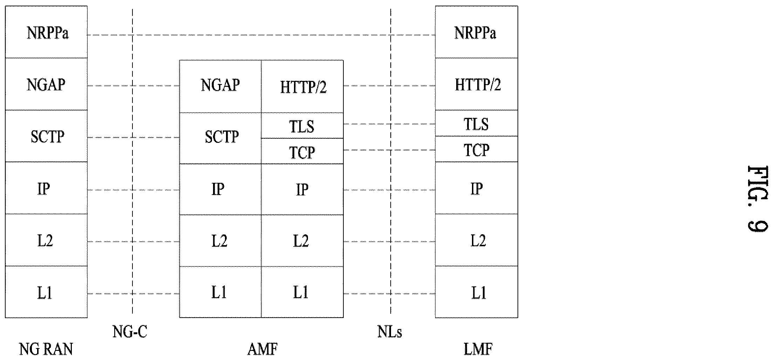

FIG. 9 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

## 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

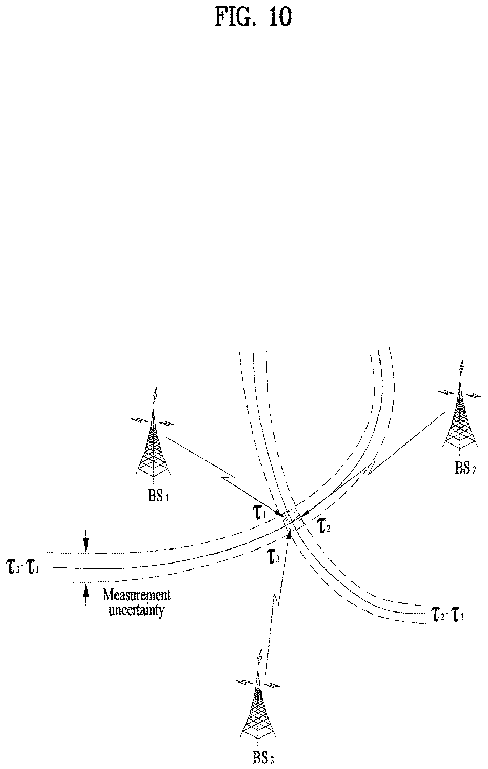

FIG. 10 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi,1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, {xt, yt} are (unknown) coordinates of a target UE, {xi, yi} are (known) coordinates of a TP, and {x1, y1} are coordinates of a reference TP (or another TP). Here, (Ti-T1) is a transmission time offset between two TPs, referred to as "real time differences" (RTDs), and ni and n1 are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

- E-UTRAN measurement: ng-eNB Rx-Tx time difference, timing advance (TADV), and/or AoA

Here, TADV may be divided into Type 1 and Type 2 as follows.

TADV Type 1 = (ng-eNB Rx-Tx time difference)+(UE E-UTRA Rx-Tx time difference)

TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

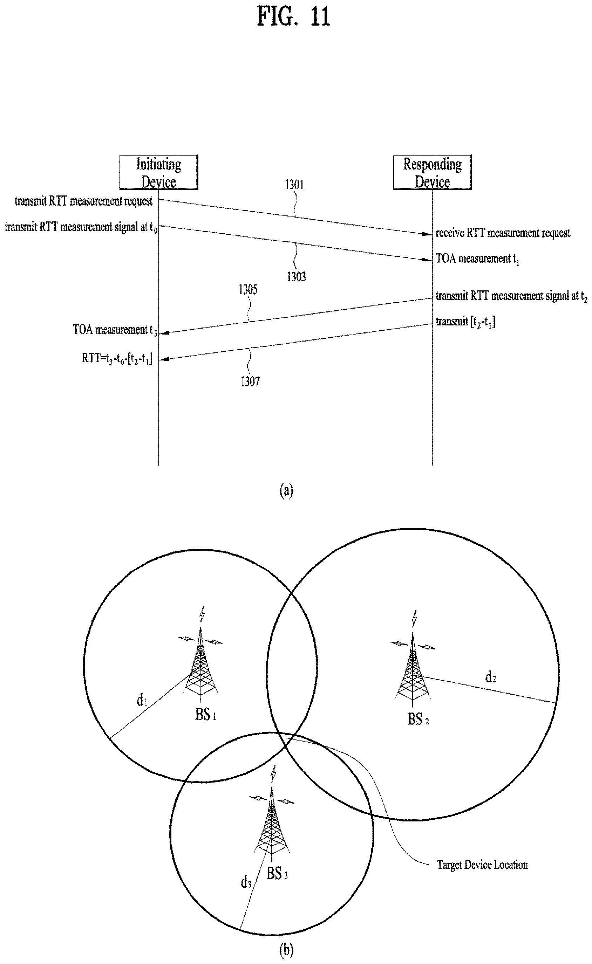

FIG. 11 is a diagram illustrating an exemplary multi-round trip time (multi-RTT) positioning method to which the embodiment is applicable.
Referring to FIG. 11(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.
In operation 1301 according to the embodiment, the initiating device may transmit an RTT measurement request, and the responding device may receive the RTT measurement request.
In operation 1303 according to the embodiment, the initiating device may transmit an RTT measurement signal at t0 and the responding device may acquire a ToA measurement $t_1$.
In operation 1305 according to the embodiment, the responding device may transmit an RTT measurement signal at $t_2$ and the initiating device may acquire a ToA measurement $t_3$.
In operation 1307 according to the embodiment, the responding device may transmit information about [$t_2$-$t_1$], and the initiating device may receive the information and calculate an RTT by Equation 6. The information may be transmitted and received based on a separate signal or in the RTT measurement signal of operation 1305.

[Equation 6]

$$\mathrm{RTT} = t_3 - t_0 - [t_2 - t_1]$$

Referring to FIG. 11(b), an RTT may correspond to a double-range measurement between two devices. Positioning estimation may be performed from the corresponding information, and multilateration may be used for the positioning estimation, di, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered respectively.

**3. Embodiment**

A detailed description will be given of the embodiment based on the above technical ideas. The afore-described contents of Section 1 and Section 2 are applicable to the embodiment described below. For example, operations, functions, terminologies, and so on which are not defined in the embodiment may be performed and described based on Section 1 and Section 2.
Symbols/abbreviations/terms used in the description of the embodiment may be defined as follows.

- A/B/C: A and/or B and/or C
- LMF: location management function
- MAC: medium access control
- MAC CE: MAC control element
- MG: measurement gap. In the description of the embodiment, an MG may be an opportunity given for a UE to perform measurements on a DL signal.

In the description of the embodiment, a BS may be understood as a comprehensive term including a remote radio head (RRH), an eNB, a gNB, a TP, a reception point (RP), a relay, and the like.
In the description of the embodiment, the expression 'greater than/above A' may be replaced with the expression

'above/greater than A.'

In the description of the embodiment, the expression 'less than/below B' may be replaced with the expression 'below/less than B.'

In the description of the embodiment, activation/deactivation may be replaced by setup/release, and setup/release may be replaced by activation/deactivation.

In the description of the embodiment, an information element (IE) configuring deactivation information may be understood as providing parameters and/or detailed information upon activation.

In the description of the embodiment, MAC CE content and/or MAC CE-based methods may be extended and applied to DCI and/or other channels. In the description of the embodiment, a MAC CE may be replaced by DCI, other channels, and/or other signals.

In the description of the embodiment, the unit of a timer may be milliseconds (ms) and/or nanoseconds (ns).

In the description of the embodiment, parameters may be configured/indicated by a cell/BS station/LMF to a UE, but the present disclosure are not limited thereto.

In the description of the embodiment, parameters may be requested by a UE in an on-demand manner form from a cell/BS/LMF for specific parameters and/or values thereof, but the present disclosure is not limited thereto.

The embodiment may be applied to artificial intelligence (AI) and/or machine learning (ML).

The embodiment may also be applied to an MG for other purposes such as radio resource management (RRM).

The embodiment may be applied regardless of RRC states (e.g., RRC connected/idle/inactive). The embodiment may be applied to each RRC state.

The embodiment may relate to a method of activating/deactivating an MG.

In the NR system, positioning measurement is defined such that the UE expects PRS measurement only within an MG configured/provided by the BS. The MG configuration may be provided by the BS to the UE through RRC signaling. Such RRC signaling/messages may include information on the setup/release for the MG.

From Rel-17 onwards, as part of latency enhancement, there is a discussion about providing relevant information through lower layer signaling (such as DCI and/or a MAC CE) rather than RRC signaling. If activation and/or deactivation are transmitted through lower layer signaling, regulations for the relevant information and/or related procedures may be required. According to the embodiment, the activation/deactivation of an MG may be related to MAC CE provision, provided content/data, and detailed procedures.

According to the embodiment, information regarding which of FR1, FR2, and both FR the indicated configuration is related to may be provided. While the following embodiments are described based on FR1 and FR2, the embodiments may also be extended and applied to FR3, FR4, FR5, and so on.

According to the embodiment, details of a gap offset/length/repetition period/MG timing advance, etc. may be provided.

According to the embodiment, details of a system frame number (SFN) and an indicator for a serving cell that serves as the reference for subframes in FR2 may be provided. The embodiment may be applied to other FRs including FR2.

According to the embodiment, details of transmission of information on MG deactivation may be provided.

According to the embodiment, details of an MG group/set ID and/or multiple MG IDs may be provided. According to the embodiment, when there are multiple configurations for an MG, the ID thereof may be used to inform activation/deactivation of a specific MG configuration among the multiple configurations.

According to the embodiment, details of time information on an MG start time and/or MG end time (and/or period) may be provided.

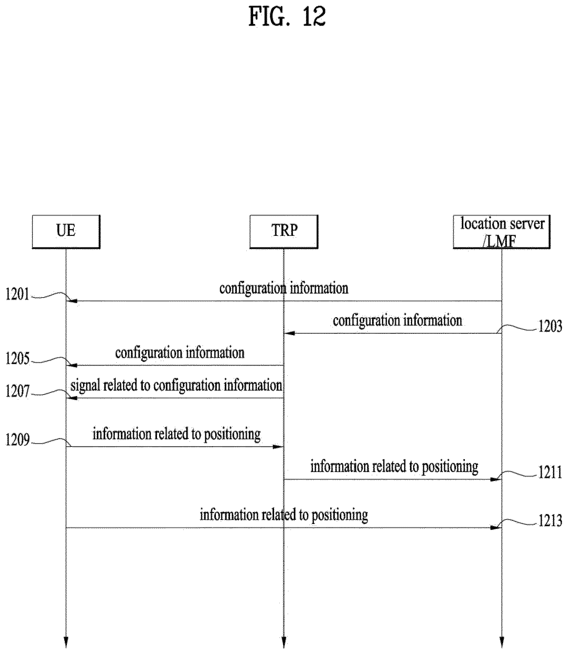

FIG. 12 is a simplified diagram illustrating an operating method of a UE, a TRP, a location server, and/or an LMF according to the embodiment.

Referring to FIG. 12, in operation 1201 according to the embodiment, the location server and/or the LMF may transmit configuration indicated to the UE and the UE may receive the configuration information.

In operation 1203 according to the embodiment, the location server and/or the LMF may transmit reference configuration information to the TRP and the TRP may receive the reference configuration information. In operation 1205 according to the embodiment, the TRP may transmit the reference configuration information to the UE and the UE may receive the reference configuration information. In this case, operation 1201 according to the embodiment may be omitted.

In contrast, operations 1203 and 1205 according to the embodiment may be omitted. In this case, operation 1201 according to the embodiment may be performed.

That is, operation 1201 according to the embodiment, and operations 1203 and 1205 according to the embodiment may be selectively performed.

In operation 1207 according to the embodiment, the TRP may transmit a signal related to the configuration information and the UE may receive the signal related to the configuration information. For example, the signal related to the configuration information may be a signal for positioning of the UE.

In operation 1209 according to the embodiment, the UE may transmit a signal related to positioning to the TRP and the TRP may receive the signal related to positioning. In operation 1211 according to the embodiment, the TRP may transmit the signal related to positioning to the location server and/or the LMF and the location server and/or the LMF may receive the signal related to positioning.

In operation 1213 according to the embodiment, the UE may transmit the signal related to positioning to the location server and/or the LMF and the location server and/or the LMF may receive the signal related to positioning. In this case, operations 1209 and 1211 according to the embodiment may be omitted.

In contrast, operation 1213 according to the embodiment may be omitted. In this case, operations 1209 and 1211 according to the embodiment may be performed.

That is, operations 1209 and 1211 according to the embodiment, and operation 1213 according to the embodiment may be selectively performed.

According to the embodiment, the signal related to positioning may be obtained based on the configuration information and/or the signal related to the configuration information.

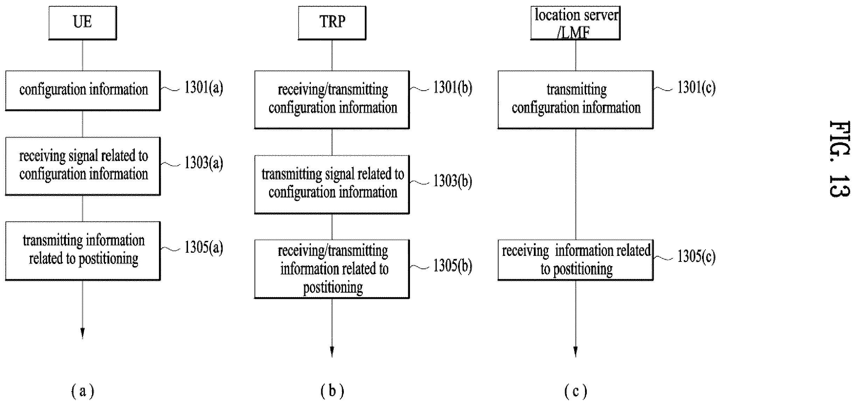

FIG. 13 is a simplified diagram illustrating an operating method of a UE, a TRP, a location server, and/or an LMF according to the embodiment.

Referring to FIG. 13(a), in operation 1301(a) according to the embodiment, the UE may receive configuration information.

In operation 1303(a) according to the embodiment, the UE may receive a signal related to the configuration information.

In operation 1305(a) according to the embodiment, the UE may transmit information related to positioning.

Referring to FIG. 13(b), in operation 1301(b) according to the embodiment, the TRP may receive configuration information from the location server and/or the LMF and transmit the configuration information to the UE.

In operation 1303(b) according to the embodiment, the TRP may transmit a signal related to the configuration information.

In operation 1305(b) according to the embodiment, the TRP may receive information related to positioning and transmit the information related to positioning to the location server and/or the LMF.

Referring to FIG. 13(c), in operation 1301(c) according to the embodiment, the location server and/or the LMF may transmit configuration information.

In operation 1305(c) according to the embodiment, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in a description of the embodiment below.

For example, the above signal related to positioning may be understood as a signal related to one or more pieces of information that the UE reports and/or a signal including one or more pieces of information that the UE reports, in a description of the embodiment below.

For example, in a description of the embodiment below, the BS, the gNB, and the cell may be replaced with the TRP, the TP, or any device serving equally as the TRP or the TP.

For example, in a description of the embodiment below, the location server may be replaced with the LMF and any device serving equally as the LMF.

More detailed operations, functions, terms, etc. in operation methods according to the embodiment may be performed and described based on the embodiment described later. The operation methods according to the embodiment is exemplary and one or more operations in the above-described operation methods may be omitted according to detailed content of each embodiment.

Hereinafter, the embodiment will be described in detail. It may be understood by those of ordinary skill in the art that the embodiment described below may be combined in whole or in part to implement other embodiments unless mutually exclusive.

In the NR system, positioning measurement is defined such that the UE expects PRS measurement only within an MG configured/provided by the BS. The MG configuration may be provided by the BS to the UE through RRC signaling. Such RRC signaling/messages may include information on the setup/release for the MG.

From Rel-17 onwards, as part of latency enhancement, there is a discussion about providing relevant information through lower layer signaling (such as DCI and/or a MAC CE) rather than RRC signaling. If activation and/or deactivation are transmitted through lower layer signaling, regulations for the relevant information and/or related procedures may be required.

According to the embodiment, the activation/deactivation of an MG may be related to MAC CE provision, provided content/data, and detailed procedures.

Table 6 shows configurations and/or setup/release procedures for an MG through RRC signaling from the BS.

[Table 6]

**Measurement gap configuration**

The UE shall:

if *gapFR1* is set to *setup:*

if an FR1 measurement gap configuration is already setup, release the FR1 measurement gap configuration;

setup the FR1 measurement gap configuration indicated by the *measGapConfig* in accordance with the received *gapOffset,* i.e., the first subframe of each gap occurs at an SFN and subframe meeting the following condition:

SFN mod $T$ = FLOOR(*gapOffset*/10);

subframe = *gapOffset* mod 10;

with $T$ = MGRP/10 as defined in TS 38.133 [14];

2> apply the specified timing advance *mgta* to the gap occurrences calculated above (i.e. the UE starts the measurement *mgta* ms before the gap subframe occurrences);

else if *gapFR1* is set to *release:*

release the FR1 measurement gap configuration;

if *gapFR2* is set to *setup:*

if an FR2 measurement gap configuration is already setup, release the FR2 measurement gap configuration;

setup the FR2 measurement gap configuration indicated by the *measGapConfig* in accordance with the received *gapOffset,* i.e., the first subframe of each gap occurs at an SFN and subframe meeting the following condition:

SFN mod $T$ = FLOOR(*gapOffsetl*/10);

subframe = *gapOffset* mod 10;

with $T$ = MGRP/10 as defined in TS 38.133 [14];

2> apply the specified timing advance *mgta* to the gap occurrences calculated above (i.e. the UE starts the measurement *mgta* ms before the gap subframe occurrences);

else if *gapFR2* is set to *release:*

release the FR2 measurement gap configuration;

if *gapUE* is set to *setup:*

if a per UE measurement gap configuration is already setup, release the per UE measurement gap configuration;

setup the per UE measurement gap configuration indicated by the *measGapConfig* in accordance with the received *gapOffset,* i.e., the first subframe of each gap occurs at an SFN and subframe meeting the following condition:

SFN mod $T$ = FLOOR(*gapOffset*/10);

subframe = *gapOffset* mod 10;

with $T$ = MGRP/10 as defined in TS 38.133 [14];

2> apply the specified timing advance *mgta* to the gap occurrences calculated

above (i.e. the UE starts the measurement *mgta* ms before the gap subframe occurrences);

else if *gapUE* is set to *release*:

release the per UE measurement gap configuration.

NOTE 1: For *gapFR2* configuration with synchmonous CA, for the UE in NE-DC or NR-DC, the SFN and subframe of the serving cell indicated by the *refServCellIndicator* in *gapFR2* is used in the gap calculation. Otherwise, the SFN and subframe of a serving cell on FR2 frequency is used in the gap calculation

(continued)

| Measurement gap configuration |
| --- |
| NOTE 2: For *gapFR1* or *gapUE* configuration, for the UE in NE-DC or NR-DC, the SFN and subframe of the serving cell indicated by the *refServCellIndicator* in corresponding *gapFR1* or *gapUE* is used in the gap calculation. Otherwise, the SFN and subframe of the PCell is used in the gap calculation.<br><br>NOTE 3: For *gapFR2* configuration with asynchronous CA, for the UE in NE-DC or NR-DC, the SFN and subframe of the serving cell indicated by the *refServCellIndicator* and *refFR2ServCellAsyncCA* in *gapFR2* is used in the gap calculation. Otherwise, the SFN and subframe of a serving cell on FR2 frequency indicated by the *refFR2ServCellAsyncCA* in *gapFR2* is used in the gap calculation |

According to the embodiment, the activation/deactivation (setup/release) for an MG transmitted through RRC signaling may be transmitted via a MAC CE.

According to the embodiment, content and/or detailed procedures transmitted via the MAC CE may be provided.

**Content**

Scenario #1: When configuration information on MG is transmitted together via MAC CE

According to the embodiment, in Scenario #1, configuration information on an MG transmitted through RRC signaling may be provided/transmitted via a MAC CE. According to the embodiment, the configuration information provided/transmitted via the MAC CE may include at least some and/or all of the following parameters and/or a combination thereof.

- Whether the corresponding configuration is indicated for FR1/FR2/both FR (FR1 and FR2)
- Gap offset/length/repetition period/measurement gap timing advance
- An indicator for a serving cell serves as the reference for SFNs and subframes in FR2

According to the embodiment, information on MG deactivation may be provided/transmitted additionally and/or separately.

For example, an MG deactivation timer may be included for each configuration of FR1/FR2/both FR. After the MG deactivation timer, a related configuration may be automatically deactivated without separate MAC CE deactivation. When the MG deactivation timer expires, the MG may be deactivated without explicit MG deactivation information. For example, a time/timer for deactivation may be included in the GapConfig IE.

For example, when a plurality of MGs are transmitted via the MAC CE, the configuration of each MG may be transmitted along with a unique ID.

Additionally/alternatively, for example, considering the number/quantity of MG IDs, a plurality of MGs may be defined as a group/set. An ID may be assigned to each group/set and then transmitted. When transmitting a timer for deactivation, a specific timer may be transmitted for the ID of a specific MG set/group and/or for multiple MG IDs. That is, a timer may be applied and transmitted separately for each MG group/set and/or MG ID, rather than on a per-FR basis.

According to the embodiment, for the MG activation, an MG indicated/configured after receiving the corresponding MAC CE may be activated. According to the embodiment, the UE may expect to receive a PRS within the MG.

Table 7 shows an example of separate deactivation time configurations for each FR (timerForDeactivation ENUMERATED {t1, t2, t3, ..., tn}).

[Table 7]

```
        MeasGapConfig ::=                      SEQUENCE {
        gapFR2                                 SetupRelease { GapConfig }
OPTIONAL,    -- Need M
        ...,
        [[
        gapFR1                                 SetupRelease { GapConfig }
OPTIONAL,    -- Need M
        gapUE                                  SetupRelease { GapConfig }
OPTIONAL      -- Need M
        ]]


        }


        GapConfig ::=                          SEQUENCE {
        gapOffset                              INTEGER (0..159),
        mgl                                    ENUMERATED {ms1dot5, ms3,
ms3dot5, ms4, ms5dot5, ms6},
        mgrp                                   ENUMERATED {ms20, ms40,
ms80, ms160},
        mgta                                   ENUMERATED {ms0, ms0dot25,
ms0dot5},
        ...,
        [[
        refServCellIndicator                   ENUMERATED {pCell, pSCell,
mcg-FR2

        timerForDeactivation                   ENUMERATED {t1, t2, t3, … tn},


        OPTIONAL    -- Cond NEDCorNRDC
        ]],
        [[
        refFR2ServCellAsyncCA-r16              ServCellIndex
OPTIONAL,    -- Cond AsyncCA
        mgl-r16                                ENUMERATED {ms10, ms20}
OPTIONAL      -- Cond PRS
        ]]
        }
```

Referring to Table 7, a separate deactivation signal may not be transmitted and received via a MAC CE, but deactivation time configurations may be included in MG configuration information.

For example, the deactivation time may be t slots/subframes/frames and/or combinations thereof.

Additionally/alternatively, for example, the deactivation time may be indicated by a positive integer value t, which may be N*PRS periodicity considering periodic PRS transmission.

Scenario #2: When only activation/deactivation information on simple MG is transmitted via MAC CE

According to the embodiment, in Scenario #2, unlike Scenario #1, detailed configurations for an MG are not transmitted via a MAC CE. Instead, detailed MG configuration information may be transmitted first via RRC signaling and/or assistance data as in Scenario #1, and information on whether predetermined resources are activated or deactivated may be transmitted via a MAC CE.

According to the embodiment, MG configurations may be configured on a single and/or multiple and/or group level. The details are the same as described in Scenario #1.

According to the embodiment, information transmitted via the MAC CE (for activation and/or deactivation) may be as follows. According to the embodiment, at least one of the following information and/or combinations thereof may be transmitted and received.

- Information for distinguishing configurations of FR1/FR2/both FR:

According to the embodiment, since the previous MG configurations are configured for each FR, the corresponding parameters may be information transmitted to activate (and/or deactivate) all single and/or multiple MGs existing in the corresponding FR.

- MG group/set ID and/or multiple MG IDs:

According to the embodiment, the corresponding ID may be transmitted when there are a plurality of MG configurations. According to the embodiment, this may be to notify activation of a specific MG configuration among the plurality of configurations.

- Time information on MG start and/or last time (and/or duration):

According to the embodiment, the corresponding parameters may be used to enable dynamic activation by additionally configuring an activation time in consideration of an additional communication and/or processing time with the UE such as a hybrid automatic repeat request acknowledgment/negative acknowledgment (HARQ-ACK/NACK), rather than from the time at which the MAC CE is transmitted. According to the embodiment, information on the duration and/or last time may be additionally and/or separately included. According to the embodiment, the information may be regarded as being configured/indicated for deactivation. According to the embodiment, the UE may expect to receive a PRS only for MGs that exist between the start and end. According to the embodiment, the time information on activation and/or deactivation is provided for each FR and/or MG group and/or single MG in consideration of various situations such as current data traffic and/or latency. It may be set separately and/or may be set common considering signaling overhead. According to the implementation, time information on activation and/or deactivation may be separately configured for each FR, each MG group, and/or individual MGs in consideration of various factors such as current data traffic and latency. Alternatively, the time information may be configured commonly in consideration of signaling overhead.

According to the embodiment, deactivation may be indicated/configured for activated MGs at once. Additionally/alternatively, according to the embodiment, the information may be provided/transmitted as deactivation content to enable separate deactivation for each FR, each MG group/set ID, and/or multiple MGs as described above. This may be equally applied to Scenario #1.

**Deactivation Method**

The details described in "Content" may be understood as an explanation for cases where information on deactivation and/or information related to deactivation is included when a MAC CE is used for activation. Hereinafter, embodiments related to "deactivation" will be described in detail.

Method #1: After activation, deactivation is performed after specific fixed point in time

According to the embodiment, time information on deactivation (for example, duration information) may be transmitted after a predetermined (predefined) time and/or through separate system information, RRC signaling (for activation), and/or a MAC CE.

According to the embodiment, the start point of the time may be at least one of a point when the UE starts to receive signaling related to activation, a point when the UE requests MG activation, and/or a point when the BS transmits the corresponding signaling. According to the embodiment, the UE/BS may expect that only MG configurations received up to a configured/indicated time are activated with respect to the corresponding time

Method #2: Direct deactivation via MAC CE

According to the embodiment, deactivation may be indicated/configured directly via a MAC CE.

For example, deactivation may be directly indicated/configured for a specific FR, MG, MG group/set, and/or multiple MGs. More detailed information could be referenced in Scenario #1 and/or Scenario #2.

For example, deactivation may be configured/indicated in the form of ON/OFF for FR1/FR2/both FR. For example, 1 may mean ON, 0 may mean OFF, and vice versa. For example, deactivation may be configured/indicated in the form of a bitmap, but the present disclosure is not limited thereto. For example, if ' 1 (ON)'/'0 (OFF)'/'0 (OFF)' are transmitted, this may mean that all configurations for FR1 are deactivated.

For example, when a plurality of MGs are configured, a group/set ID and/or ID information for plurality of MGs may be transmitted together.

Method #3: Combination of Method #1 and Method #2

According to the embodiment, Method #1 and Method #2 may be combined.

According to the embodiment, each activation time may be configured/indicated separately for individual configurations for each FR and/or MG. According to the embodiment, each FR and/or MG may be deactivated at different times.

According to the embodiment, deactivation may be performed differently for each FR and/or MG based on the time of receiving MAC CE deactivation.

Additionally/alternatively, according to the embodiment, the final end point of activation (i.e. the point of deactivation) may be defined/specified in advance and/or configured in system information, RRC signaling (for activation), and/or MAC CE (for activation). According to the embodiment, the BS may update the end point for deactivation via a MAC CE and/or RRC signaling within or before the corresponding time for each FR, each MG, each MG group, and/or multiple MGs Additionally/alternatively, the BS may perform early deactivation.

**Preconfiguration of MGs**

According to the embodiment, the BS may execute an MG activation process for positioning purposes. According to the embodiment, MG activation may be performed based on a DL MAC CE.

According to the embodiment, regarding MG activation via a DL MAC CE, the details of a deactivation process and/or DL MAC CE payload may be found in "Content" and/or "Deactivation Method."

According to the embodiment, the need for preconfiguration of MGs through a higher layer may be discussed.

According to the embodiment, the BS may transmit information on MG activation via a MAC CE instead of RRC signaling.

According to the embodiment, content for MG activation, detailed operations related to deactivation, and related content may be provided. More detailed information could be referenced from the relevant description described above according to the embodiment.

For example, there may be two methods for MG deactivation.

- Deactivation via separate signaling similar to MG activation.
- Provision of no additional signaling after MG activation.

According to the embodiment, a method of providing no separate signaling may involve configuring an inactivity timer for deactivation when MGs are preconfigured via system information and/or RRC signaling or transmitting the corresponding information via a MAC CE for activation.

According to the embodiment, signaling for deactivation may be indicated separately. According to the embodiment, a channel on which the corresponding information should be transmitted may be DCI or a MAC CE.

For example, deactivation may be transmitted via a MAC CE similar to MG activation.

However, for example, in the case of deactivation, information such as the configuration of an MG may not be included, and only information on deactivation may be required. Therefore, deactivation may be configured/indicated in DCI because information acquisition based on DCI may be faster than a MAC CE.

According to the embodiment, either DCI or a MAC CE may be selected depending on the amount of information transmitted for deactivation.

According to the embodiment, when the configuration of an MG is preconfigured/provided, there may not be a need to provide the detailed configuration of the MG each time via a MAC CE for MG activation, thereby reducing signaling overhead.

According to the embodiment, when a plurality of MGs are preconfigured, the BS may activate the configuration of an MG closest to the time of receiving an MG activation request, thereby obtaining latency benefits.

According to the embodiment, when a plurality of MGs are preconfigured, an MG index and/or MG ID may be introduced to distinguish between MGs. According to one embodiment, the index/ID may be included in the payload for activation.

According to the embodiment, the MG index and/or MG ID may be included in the activation request. Since the UE knows PRS resource information in advance, the UE may request an appropriate MG based on this information. Therefore, the MG index and/or MG ID may need to be included in the activation information.

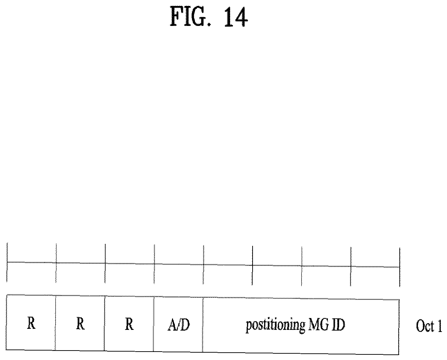

FIG. 14 illustrates an exemplary MAC CE configuration according to the embodiment.

FIG. 14 shows an example of a MAC CE for an activation/deactivation request of a positioning MG according to the embodiment. In the embodiment, an activation/deactivation request may be understood as the same as an activation request and a deactivation request.

FIG. 14 shows an example of a MAC CE for an activation/deactivation command of a positioning MG according to the embodiment. In the embodiment, an activation/deactivation command may be understood as the same as an activation command and a deactivation command.

Referring to FIG. 14, according to the embodiment, a MAC CE may be composed of 8 bits.

According to the embodiment, a positioning MG ID may be a field (e.g., 4 bits) indicating the ID for a preconfigured positioning MG.

According to the embodiment, A/D may be a field (e.g., 1 bit) indicating the activation or deactivation of the positioning MG. According to the embodiment, the field may be set to 1 to indicate activation, and otherwise, the field may indicate deactivation.

According to the embodiment, when the UE is configured with preconfigured MGs, the network may transmit a DL MAC CE for a positioning MG activation/deactivation command to the UE.

According to the embodiment, upon receiving the MAC CE for positioning MG activation/deactivation command, the UE (or the MAC entity thereof) may operate as follows:

1> If the MG activation/deactivation command MAC CE indicates the deactivation of the preconfigured positioning MG,
2> The UE may deactivate the positioning MG; and
1> If the MG activation/deactivation command MAC CE indicates the activation of the configured MG,
2> The UE may activate the positioning MG.

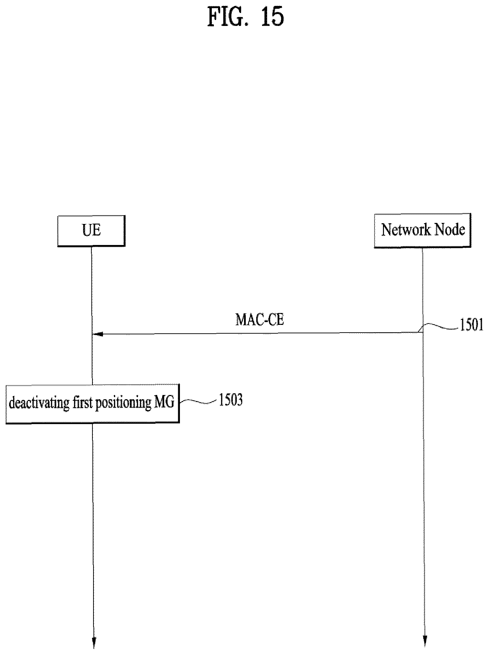

FIG. 15 is a diagram schematically illustrating an operation method of a UE and a network node according to the embodiment.

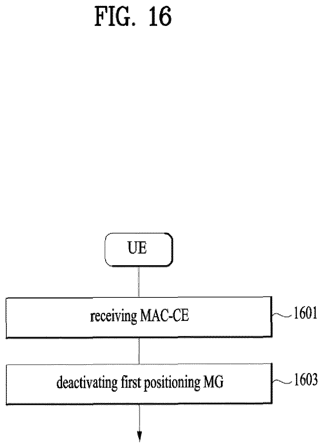

FIG. 16 is a flowchart illustrating an operating method of a UE according to the embodiment.

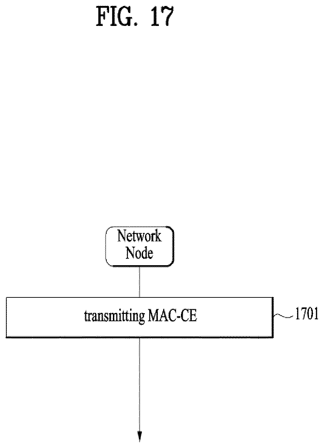

FIG. 17 is a flowchart illustrating an operating method of a network node according to the embodiment. For example, the network node may be a TP, a BS, a cell, a location server, an LMF, and/or any device that performs the same operation.

Referring to FIGS. 15 to 17, in operations 1501, 1601, and 1701 according to the embodiment, the network node may transmit a MAC CE, and the UE may receive the MAC CE.

According to the embodiment, the MAC CE may include an activation/deactivation command. According to the embodiment, the activation/deactivation command may be for at least one positioning MGs among predetermined positioning MGs.

In operations 1503 and 1603 according to the embodiment, the UE may deactivate the at least one positioning MGs when the activation/deactivation command instructs deactivation of the at least one positioning MGs.

Specific operations of the UE and/or the network node according to the above-described the embodiment may be described and performed based on Section 1 to Section 3 described before.

Since examples of the above-described proposal method may also be included in one of implementation methods of the embodiment, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal).

## 4. Exemplary Configurations of Devices Implementing The embodiment

### 4.1. Exemplary configurations of devices to which the embodiment is applied

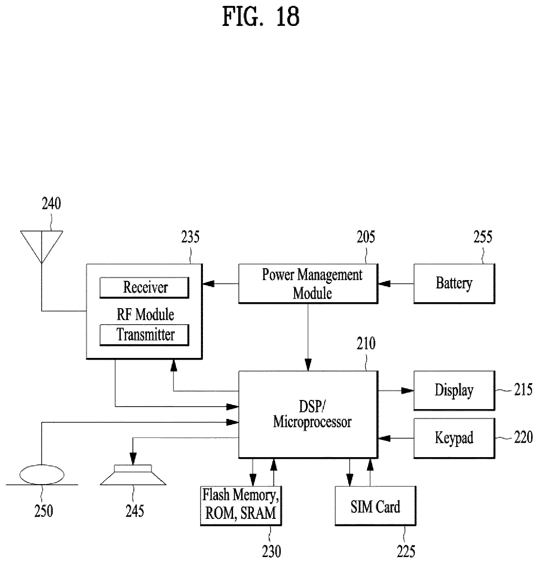

FIG. 18 is a diagram illustrating a device that implements the embodiment.

The device illustrated in FIG. 18 may be a UE and/or a BS (e.g., eNB or gNB or TP) and/or a location server (or LMF) which is adapted to perform the above-described mechanism, or any device performing the same operation.

Referring to FIG. 18, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer's selection.

Particularly, FIG. 18 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 18 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to the embodiment, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to the embodiment, the at least one processor included in the UE (or at least one processor of the communication device included in the UE) may be configured to receive an activation/deactivation command for at least one first positioning measurement gap (MG) included in predetermined positioning MGs via a MAC CE.

According to the embodiment, the at least one processor included in the UE may be configured to deactivate the at least one first positioning MG based on that the activation/deactivation command instructs deactivation of the at least one first positioning MG.

According to the embodiment, the predetermined positioning MGs may be preconfigured through RRC signaling,

According to the embodiment, the predetermined positioning MGs may be related to different identifiers, respectively.

According to the embodiment, the MAC CE may include at least one identifier.

According to the embodiment, based on that the activation/deactivation command instructs the deactivation of the at least one first positioning MG, at least one positioning MG related to the at least one identifier included in the MAC CE among the predetermined positioning MGs related to the different identifiers may be identified as the at least one first positioning MG to be deactivated.

According to the embodiment, the at least one processor may be configured to transmit an activation request for at least one second positioning MG among the predetermined positioning MGs via the MAC CE.

According to the embodiment, the activation request may include at least one identifier related to the at least one second positioning MG among the different identifiers.

According to the embodiment, the at least one processor may be configured to activate at least one positioning MG based on that the activation/deactivation command instructs activation of the at least one positioning MG.

According to the embodiment, based on that the activation/deactivation command instructing the activation of the at least one positioning MG includes information on a deactivation time, the activated at least one positioning MG may be deactivated after a time identified based on the information on the deactivation time.

According to the embodiment, the at least one processor included in the network node (or at least one processor of the communication device included in the network node) may be configured to generate an activation/deactivation command for at least one first positioning MG included in predetermined positioning MGs.

According to the embodiment, the at least one processor included in the network node may be configured to transmit the activation/deactivation command via a MAC CE.

According to the embodiment, based on the activation/deactivation command instructs deactivation of the at least one first positioning MG, the at least one first positioning MG may be deactivated.

Specific operations of the UE and/or the network node according to the above-described the embodiment may be described and performed based on Section 1 to Section 3 described before.

Unless contradicting each other, the embodiment may be implemented in combination. For example, (the processor included in) the UE and/or the network node according to the embodiment may perform operations in combination of the embodiments of the afore-described in Section 1 to Section 3, unless contradicting each other.

### 4.2. Example of communication system to which the embodiment is applied

In the present specification, the embodiment have been mainly described in relation to data transmission and reception between a BS and a UE in a wireless communication system. However, the embodiment is not limited thereto. For example, the embodiment may also relate to the following technical configurations.

The various descriptions, functions, procedures, proposals, methods, and/or operational flowcharts of the embodiment described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

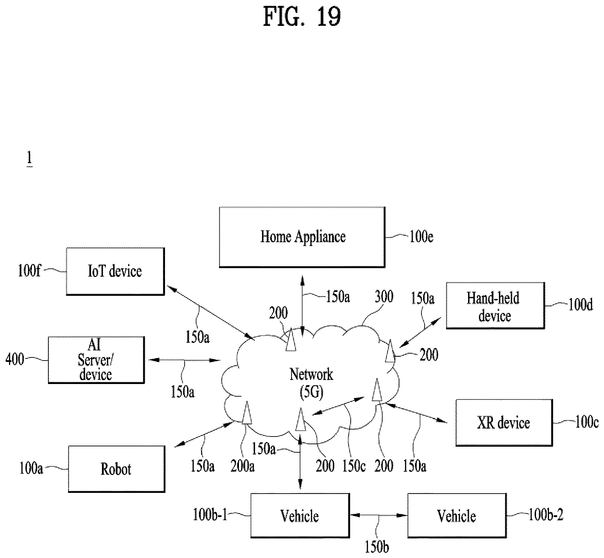

FIG. 19 illustrates an exemplary communication system to which the embodiment is applied.

Referring to FIG. 19, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

Example of wireless devices to which the embodiment is applied

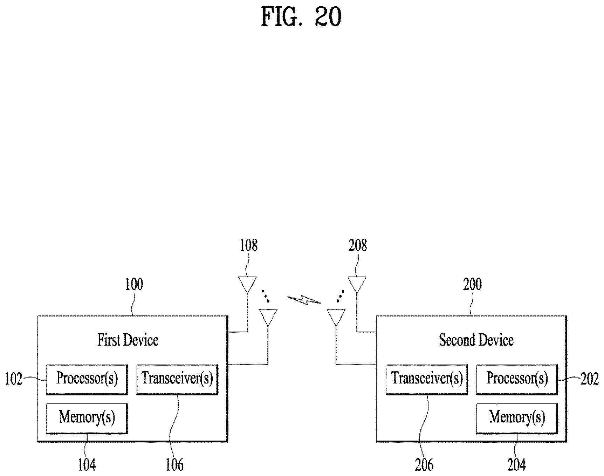

FIG. 20 illustrates exemplary wireless devices to which the embodiment is applicable.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. W1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to the embodiment, one or more memories (e.g., 104 or 204) may store instructions or programs which, when executed, cause one or more processors operably coupled to the one or more memories to perform operations according to the embodiment or implementations of the present disclosure.

According to the embodiment, a computer-readable storage medium may store one or more instructions or computer programs which, when executed by one or more processors, cause the one or more processors to perform operations according to the embodiment or implementations of the present disclosure.

According to the embodiment, a processing device or apparatus may include one or more processors and one or more computer memories connected to the one or more processors. The one or more computer memories may store instructions or programs which, when executed, cause the one or more processors operably coupled to the one or more memories to perform operations according to the embodiment or implementations of the present disclosure.

Example of using wireless devices to which the embodiment is applied

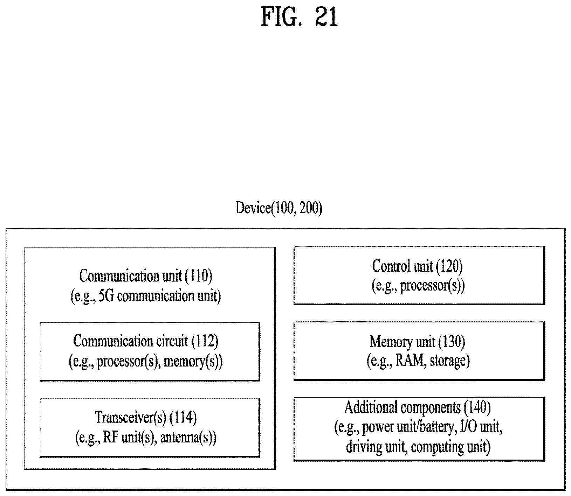

FIG. 21 illustrates other exemplary wireless devices to which the embodiment is applied. The wireless devices may be implemented in various forms according to a use case/service (see FIG. 19).

Referring to FIG. 21, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

Example of portable device to which the embodiment is applied

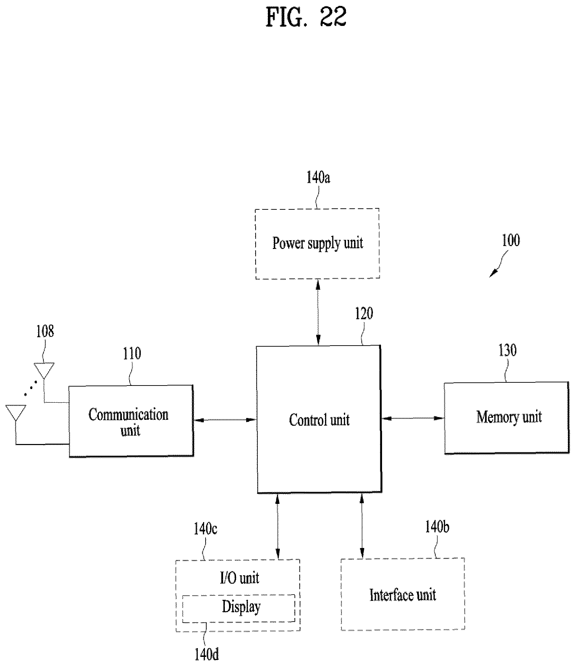

FIG. 22 illustrates an exemplary portable device to which the embodiment is applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which the embodiment

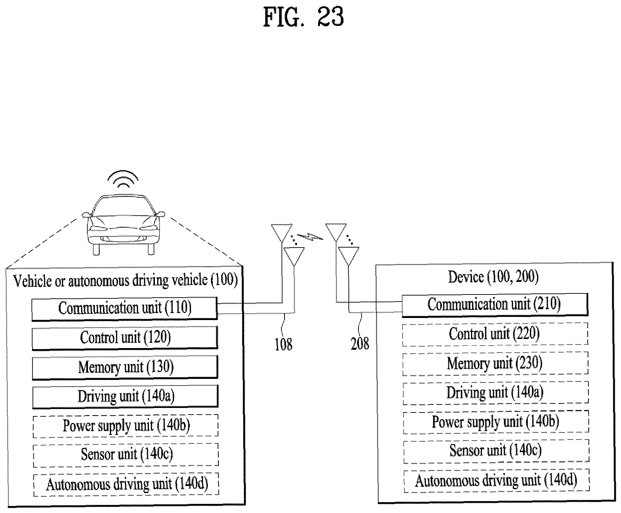

FIG. 23 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 23, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, the embodiment may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode multi-band (MMMB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which the embodiment is implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to the embodiment may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to the embodiment may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

The embodiment may be implemented in various means. For example, the embodiment may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiment may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

**INDUSTRIAL APPLICABILITY**

The embodiment is applicable to various wireless access systems including a 3GPP system, and/or a 3GPP2 system. Besides these wireless access systems, the embodiment is applicable to all technical fields in which the wireless access systems find their applications. Moreover, the proposed method can also be applied to mmWave communication using an ultrahigh frequency band.

**Claims**

1. A method performed by a user equipment (UE) in a wireless communication system, the method comprising:

   receiving an activation/deactivation command for at least one first positioning measurement gap (MG) included in predetermined positioning MGs via a medium access control (MAC) control element (CE); and
   deactivating the at least one first positioning MG based on that the activation/deactivation command instructs deactivation of the at least one first positioning MG.

2. The method of claim 1, wherein the predetermined positioning MGs are preconfigured through radio resource control (RRC) signaling, and
   wherein the predetermined positioning MGs are related to different identifiers, respectively.

3. The method of claim 2, wherein the MAC CE includes at least one identifier, and
   wherein based on that the activation/deactivation command instructs the deactivation of the at least one first positioning MG, at least one positioning MG related to the at least one identifier included in the MAC CE among the predetermined positioning MGs related to the different identifiers is identified as the at least one first positioning MG to be deactivated.

4. The method of claim 2, further comprising transmitting an activation request for at least one second positioning MG among the predetermined positioning MGs via the MAC CE,
   wherein the activation request includes at least one identifier related to the at least one second positioning MG among the different identifiers.

5. The method of claim 1, comprising activating at least one positioning MG based on that the activation/deactivation command instructs activation of the at least one positioning MG.

6. The method of claim 5, wherein based on that the activation/deactivation command instructing the activation of the at least one positioning MG includes information on a deactivation time, the activated at least one positioning MG is deactivated after a time identified based on the information on the deactivation time.

7. A user equipment (UE) configured to operate in a wireless communication system, the UE comprising:

   a transceiver; and
   at least one processor connected to the transceiver,
   wherein the at least one processor is configured to:

      receive an activation/deactivation command for at least one first positioning measurement gap (MG) included in predetermined positioning MGs via a medium access control (MAC) control element (CE); and
      deactivate the at least one first positioning MG based on that the activation/deactivation command instructs deactivation of the at least one first positioning MG.

8. The UE of claim 7, wherein the predetermined positioning MGs are preconfigured through radio resource control (RRC) signaling, and
   wherein the predetermined positioning MGs are related to different identifiers, respectively.

9. The UE of claim 8, wherein the MAC CE includes at least one identifier, and wherein based on that the activation/deactivation command instructs the deactivation of the at least one first positioning MG, at least one positioning MG related to the at least one identifier included in the MAC CE among the predetermined positioning MGs related to the different identifiers is identified as the at least one first positioning MG to be deactivated.

10. The UE of claim 7, wherein the at least one processor is configured to activate at least one positioning MG based on that the activation/deactivation command instructs activation of the at least one positioning MG.

11. The UE of claim 6, wherein the at least one processors is configured to communicate with at least one of a mobile terminal, a network, and an autonomous vehicle other than a vehicle including the UE.

12. A method performed by a base station (BS) in a wireless communication system, the method comprising:

   generating an activation/deactivation command for at least one first positioning measurement gap (MG) included in predetermined positioning MGs; and
   transmitting the activation/deactivation command via a medium access control (MAC) control element (CE), wherein based on the activation/deactivation command instructs deactivation of the at least one first positioning MG, the at least one first positioning MG is deactivated.

13. A base station (BS) configured to operate in a wireless communication system, the BS comprising:

   a transceiver; and
   at least one processor connected to the transceiver,
   wherein the at least one processor is configured to:

      generate an activation/deactivation command for at least one first positioning measurement gap (MG) included in predetermined positioning MGs; and
      transmit the activation/deactivation command via a medium access control (MAC) control element (CE), wherein based on the activation/deactivation command instructs deactivation of the at least one first positioning MG, the at least one first positioning MG is deactivated.

14. An apparatus configured to operate in a wireless communication system, the apparatus comprising:

   at least one processor; and
   at least one memory operably connected to the at least one processor and configured to store one or more instructions that, based on execution, cause the at least one processor to perform operations comprising:

      receiving an activation/deactivation command for at least one first positioning measurement gap (MG) included in predetermined positioning MGs via a medium access control (MAC) control element (CE); and
      deactivating the at least one first positioning MG based on that the activation/deactivation command instructs deactivation of the at least one first positioning MG.

15. A non-transitory processor-readable medium configured to store one or more instructions that cause at least one processor to perform operations comprising:

   receiving an activation/deactivation command for at least one first positioning measurement gap (MG) included in predetermined positioning MGs via a medium access control (MAC) control element (CE); and
   deactivating the at least one first positioning MG based on that the activation/deactivation command instructs deactivation of the at least one first positioning MG.

FIG. 1

# FIG. 2

Radio Frame 10ms

Fixed Size

Subframe 1ms

| 0 | 1 | 2 | 3 | 4 | 5 | 6 | 7 | 8 | 9 |

Subframe = {1, 2, 4} Slots

Slot

| 0 | 1 | 2 | 3 |

Subframe = {7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot = {2, 4, 7} Symbols

# FIG. 3

# FIG. 4

# FIG. 5

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

# FIG. 6

# FIG. 7

# FIG. 8

FIG. 9

FIG. 10

EP 4 429 361 A1

# FIG. 11

(a)

(b)

44

# FIG. 12

```
        UE                      TRP              location server
                                                      /LMF

1201              configuration information
                                                       
                          configuration information      1203

1205         configuration information

1207   signal related to configuration information

1209      information related to positioning

                          information related to positioning    1211

              information related to positioning           1213
```

# FIG. 13

(a)

| UE |

configuration information — 1301(a)

receiving signal related to configuration information — 1303(a)

transmitting information related to postitioning — 1305(a)

( a )

(b)

| TRP |

receiving/transmitting configuration information — 1301(b)

transmitting signal related to configuration information — 1303(b)

receiving/transmitting information related to postitioning — 1305(b)

( b )

(c)

| location server /LMF |

transmitting configuration information — 1301(c)

receiving information related to postitioning — 1305(c)

( c )

# FIG. 14

| R | R | R | A/D | postitioning MG ID | Oct 1 |
|---|---|---|-----|--------------------|-------|

# FIG. 15

# FIG. 16

```
        ┌──────────┐
        │    UE    │
        └────┬─────┘
             │
  ┌──────────┴──────────────┐
  │   receiving MAC-CE      │~1601
  └──────────┬──────────────┘
             │
  ┌──────────┴──────────────┐
  │ deactivating first      │~1603
  │ positioning MG          │
  └──────────┬──────────────┘
             │
             ▼
```

# FIG. 17

```
        ┌─────────┐
        │ Network │
        │  Node   │
        └─────────┘
             │
             ▼
┌────────────────────────────────┐
│       transmitting MAC-CE      │ ～1701
└────────────────────────────────┘
             │
             │
             ▼
```

# FIG. 18

FIG. 19

# FIG. 20

# FIG. 21

Device(100, 200)

| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 22

140a

Power supply unit

100

108

110

Communication unit

120

Control unit

130

Memory unit

140c

I/O unit

Display

140d

140b

Interface unit

# FIG. 23

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

International application No.

**PCT/KR2022/014514**

| A. | CLASSIFICATION OF SUBJECT MATTER |
|---|---|

**H04W 72/04**(2009.01)i; **H04W 24/10**(2009.01)i; **H04W 64/00**(2009.01)i

According to International Patent Classification (IPC) or to both national classification and IPC

| B. | FIELDS SEARCHED |
|---|---|

Minimum documentation searched (classification system followed by classification symbols)

H04W 72/04(2009.01); H04L 27/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MAC-CE(medium access control-control element), 측위(positioning), MG(measurement gap), 활성화(activation), 비활성화(deactivation)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | VIVO. Discussion on latency enhancement for NR positioning. R1-2108978, 3GPP TSG RAN WG1 #106bis-e. 01 October 2021.<br>See sections 3-3.2.2. | 1-15 |
| A | LG ELECTRONICS. Discussion on latency improvements for NR positioning. R1-2110091, 3GPP TSG RAN WG1 #106bis-e. 02 October 2021.<br>See sections 1-2.3. | 1-15 |
| A | INTERDIGITAL, INC. Latency improvements for both DL and DL+UL positioning methods. R1-2110149, 3GPP TSG RAN WG1 #106bis-e. 02 October 2021.<br>See sections 1-4.2. | 1-15 |
| A | MEDIATEK INC. Discussion on pre-configured gap. R4-2117603, 3GPP TSG-RAN WG4 Meeting #101-e. 22 October 2021.<br>See sections 1-4. | 1-15 |
| A | WO 2021-203307 A1 (APPLE INC.) 14 October 2021 (2021-10-14)<br>See paragraphs [0033]-[0105]; and figures 1-14. | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 January 2023** | **12 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/014514**

| Patent document cited in search report | Publication date (day/month/year) | Patent family member(s) | Publication date (day/month/year) |
|---|---|---|---|
| WO 2021-203307 A1 | 14 October 2021 | None | |

Form PCT/ISA/210 (patent family annex) (July 2022)

58